**Europäisches Patentamt**

(19) **European Patent Office**

**Office européen des brevets**

(11) Publication number: **0 038 147**
**B1**

(12) **EUROPEAN PATENT SPECIFICATION**

(45) Date of publication of patent specification: **26.09.84**

(21) Application number: **81301439.6**

(22) Date of filing: **02.04.81**

(51) Int. Cl.³: **H 04 Q 3/54,** H 04 Q 11/04

(54) Improvements in or relating to computer control systems.

(30) Priority: **15.04.80 GB 8012413**

(43) Date of publication of application:
**21.10.81 Bulletin 81/42**

(45) Publication of the grant of the patent:
**26.09.84 Bulletin 84/39**

(84) Designated Contracting States:
**AT BE CH DE FR GB IT LI LU NL SE**

(56) References cited:
**EP-A-0 018 617**
**GB-A-1 119 953**
**GB-A-1 391 084**

**ELECTRICAL COMMUNICATION, vol. 42, no. 3, 1967, pages 402-414, New York, U.S.A. DEJEAN et al.: "Disposed telecommunication network structure"**
**GEC JOURNAL OF SCIENCE AND TECHNOLOGY, vol. 45, no. 3, 1979, pages 116-122 Wembley, G.B. NISSEN et al.: "A fault-tolerant multimicroprocessor"**

(73) Proprietor: **THE POST OFFICE**
**23 Howland Street**
**London W1P 6HQ (GB)**

(72) Inventor: **Williams, Anthony**
**Flat 1 62 Hazlewell Road Putney**
**London SW15 6LR (GB)**

(74) Representative: **Shipley, Henry Horton**
**British Telecom Intellectual Property Unit 13th Floor 151 Gower Street**
**London WC1E 6BA (GB)**

Courier Press, Leamington Spa, England.

**0 038 147**

(56) References cited:
IEEE INTERNATIONAL CONFERENCE ON
COMMUNICATIONS, 12th-15th June 1977,
pages 27.4-209 to 27.4-213 New York, U.S.A.
DOUGLAS et al.: "No. 3 EAX system software"
PROCEEDINGS OF THE NATIONAL
ELECTRONICS CONFERENCE, vol. 33, 29th-
31st October 1979, pages 55-59 Oak Brook,
U.S.A., CORNELY et al.: "ROLM VLCBX system
overview"
NEC RESEARCH AND DEVELOPMENT, no. 54,
July 1979, pages 88-105 Tokyo, JP. SUGITA et
al.: "NXE-20 international telephone switching
system"
ELECTRICAL COMMUNICATION, vol. 54, no. 4,
1979, pages 292-296 New York, U.S.A. PENA
MARI: "Design techniques for the stored
program multiregister software"
IBM TECHNICAL DISCLOSURE BULLETIN, vol.
15, no. 5, October 1972, pages 1643-1644 New
York, U.S.A. CHROUST: "Multiprocessing
schedule"

**Description**

This invention relates to computer-controlled systems, and in particular to computer-controlled telephone exchanges.

In computer-controlled exchanges, as opposed. to conventional exchanges of the Strowger type, control is exercised by a computer, and interactions between separate pieces of equipment are controlled by the computer. Whereas a piece of Strowger equipment would interact directly with another piece to determine if for example it were engaged, in a computer-controlled exchange the interaction would in many cases be on the basis of the condition (e.g. in use, free for use, equipped, not equipped, out of service etc.) of the equipment stored in the computer.

In a computer-controlled exchange, the computer controlling the exchange may take the form of an arrangement of micro-processors as described in the paper "A fault-tolerant multi microprocessor for Telecommunications and General Applications" by J. C. D. Nissen and G. V. Geiger published in the GEC Journal of Science and Technology, Volume 45, No. 3, pp. 116—122. The microprocessor arrangement may have the processing power distributed throughout the exchange, or centralised or a mixture of both, and the processing power may be used to carry out functions which in non computer-controlled exchanges were carried out by hardware.

A further prior art example of a computer-controlled system is described in United Kingdom Patent No. 1119953. This publication describes a network of telephone exchanges, which interact to allow a call to be made through the network, and addresses the problem of controlling the set up of the call when there are other calls through the network and/or when some of the exchanges are inoperative. It solved the problem of lost calls which can occur in a "transfer forward" system of control by retaining the control of the call set up at the originating exchange. Such a retention of control can cause unacceptable delays in call set up times if the originating exchange uses a question and answer protocol for availability of the next link or exchange in the call route. As explained in the publication this problem is overcome by arranging for each exchange in the network to store information on the condition of every other link/exchange in the network, and for this information to be continuously updated. Therefore the originating exchange "knows" the routes available for the call requested and can set up the call. Thus this known system requires each exchange to store the conditions of all other resources in the system.

When in a conventional exchange equipment is installed it has to be connected physically to other equipment which is modified to be able to work with the new equipment. In some cases, however, in a computer-controlled exchange the existence or not of some equipment is only determinable through the computer.

When provisioning an exchange with its functional resources careful records need to be kept to ensure all the necessary resources are present and operational before bringing a particular string of resources into service. The problem of record keeping also occurs in the case of maintenance where before taking a resource out of operation all the affected resources must be informed of the impending alteration and put into a state which permits such taking out of service of the resource.

The Nissen et al. publication refers to taking a resource out of service in the event of a fault. In one aspect, the present invention is concerned with ascertaining the effect of such a proposed removal from service on the affected resources and the consequential reconfiguration of the system.

It is an object of the present invention to provide improved means of interaction between resources of a computer-controlled system, in particular a telephone exchange, in so far as those interactions relate to the states of availability of resources (e.g. equipped, not equipped etc.) as opposed to the activities (e.g. in use, free for use etc.) of in-service resources.

In this specification computer-controlled system means any system of resources which resources interact to perform an overall task and in which the interaction of those resources to perform the taks is controlled by a computer (whether distributed, centralised or mixed processing power is used). The invention provides an improved control in so far as it provides improved access to information on the fitness for service of those resources and of a string of those resources.

According to the invention there is provided a computer-controlled system, in particular a computer-controlled telephone exchange, including a plurality of interactive resources (1, 3, 4) each of which resources is in the form of a hardware and/or software part of the system and can interact with one or more such resources to perform an overall task of the system (e.g. providing exchange facilities) under the control of a computer of the system utilising distributed, centralised or mixed processing power, in which system each of the interactive resources (1, 3, 4) may take one of a plurality of states of availability (e.g. equipped, not equipped, etc., as opposed to the activities, e.g. in use, free for use, etc., of in-service resources), the resources (1, 3, 4) are arranged in a hierarchy so that a given resource (1, 3, 4) has stored within it only the identity of parent resources ((3, 4) not shown, not shown, respectively) directly above it in the hierarchy which limit its highest state of availability and the identity of dependent resources (not shown, 1, 1 respectively) directly below it in the hierarchy whose highest states of availability it limits, and a change of state of availability of said given resource (1, 3, 4) is only permitted when the states of availability of the directly interacting resources ((3, 4), 1, 1 respectively) are compatible with said change.

The invention solves the problem of ascertaining the effect of a change of state of availability of a given resource on the system without needing recourse to separate records and without needing to store the state of availability of all resources at each resource. This is achieved by requiring each resource only to obtain from its directly interacting resources the state of availability of those interacting resources and not permitting a change of state of availability until all affected resources in the resource string preventing that change are able to be put in a state of availability to allow that change. The restriction on only permitting a change of state of availability when all affected resources in a string are compatible is achieved by arranging the resources in a hierarchy so that a resource (parent resource) directly above a given resource in the hierarchy limits the highest state of availability of the given resource and the given resource limits the highest state of availability of the resources directly below it in the hierarchy (dependent resources).

It is preferred that in the system a change of state of availability in said given resource enables and initiates a change in state of availability in a resource whose identity is stored in said given resource and which, but for the constraint of the previous state of availability of said given resource, could legitimately have made that change of state of availability.

It is further preferred that the state of availability of a said given resource is limited by a hypothetical resource comprising a logic element operating on the states of availability of one or more resources whose identities are stored in said given resource.

In the system there may be five states of availability for a resource.

It is preferred that each state of availability is of one of a plurality of ranked categories and each given resource is constrained to a state of availability having a category not higher than a logical combination of the categories of the states of availability of the resources whose identities are stored within said resource.

It is also preferred that one or more given resources may be interrogated to determine the states of availability of any or all of the resources whose identities are stored in said given resource.

In the following description the term resource will be used to indicate any part of an exchange, hardware and/or software, that can be made use of (or could be made use of) to provide exchange facilities. It should also be noted that storage of a resource identity may be both explicit and implicit, and in particular that it may be deduced via an algorithm or otherwise. Most resources in a modern telephone exchange are in fact a combination of hardware and software.

The invention will now be described by way of example only and with reference to the figures which show:—

Figs. 1, 3, 5 and 7 are arrangements of resources showing the interacting dependencies,

Figs. 2, 4, 6 and 8 are truth tables for particular resource dependencies.

Every resource can take several states:—

| | |
|---|---|
| Not equipped (NE) | (a) |
| Out of service (OOS) | (b) |
| Equipped (E) | |
| Test traffic allowed (TTA) | (c) |
| In service (IS) | |

(a), (b) and (c) are called categories. We define (a) to be less than (b) to be less than (c), and should note that every resource may not necessarily take every state.

Each resource forms part of a hierarchy of resources: for example, before a 32-channel pcm system can be provided or used there must be a route for it to be provided on, and then only when the pcm system has been provided can each individual circuit be utilised. Further, each resource may depend on more than one other resource. For example only when there is a digital line termination to interface the circuits with the switchblock can there be a circuit provided so that a circuit depends on the digital line termination and the pcm system.

In the resource hierarchy those resources immediately above a given resource are called parents, and those immediately below are called dependants. In general, the resource is not allowed to have a higher category than any parent. This is achieved by including in each resource a list of dependants and parents, and as has been said previously the identities of the parents and dependants may be stored implicitly or explicitly. In particular the implicit storage may include the use of an algorithm to determine the actual identity of the resource. On a command to change the state of a resource three things may happen:—

(a) a check on parents so see that the change is valid,

(b) a check on dependants to determine if as a result of the change by the resource the dependant may be required to change,

(c) a check on dependants to determine if, as a result of the change by the resource the dependant may now change to a higher state, and to initiate the change to that higher state.

The need for step (c) is to ensure that, if the resource that is to change state had been the only holding factor restraining a resource lower in the hierarchy to a lesser state, on the removal of this restraint not only is the dependant resource allowed to increase its state, but that this change is actually initiated. According as the system is arranged, the dependants may need to recheck that its change of state is permitted, if an up-to-date record is not maintained by the system.

In a typical telephone exchange there could be for example 14 layers in the hierarchy. It is therefore necessary to consider what happens when a change to the state of a resource in the middle of the hierarchy is made. When a change to a lesser state is requested it is a reasonable assumption that no parent will restrict that change, and in fact in some systems it may be arranged that no check on parents is made when a change to a lower state is made. However the change is of great importance as far as the resources below the resource which is to be changed in the hierarchy are concerned. It may be necessary to propagate a change of resources through the hierarchy below that resource which is to be changed, down to the lowest level. This is achieved by searching down through the hierarchy, first looking at the dependants of the resource to be changed, and identifying those that need to be changed to a lesser state to enable change of the original resource to its lesser state. These dependants are then checked, as new resources wanting to change, for their dependants allowing them to change, and so on down through the hierarchy. When it has been ascertained that all the changes consequent upon the original demand can be made then the changes are initiated from the bottom up so that the lowest levels are changed first and then gradually up through the hierarchy until the original resource whose change of state was requested is changed. The precise manner of the searches through the hierarchy to order the changes could be arranged in one of several ways.

For a change to a greater state of a resource the problem is much simpler since it can be presumed that only resources above it in the hierarchy will influence it. In this case the matter is quite simple in that a search has only to be made of the parents, for it is presumed that each resource is at the highest state which it is permitted to have, as a consequence of the automatic check outlined in (c) above.

It is found to be advantageous to introduce the concept of a "hypothetical parent". Whereas in many cases the actual state of a parent limits the state of the resource in the straight forward way, in others it can only be allowed to limit it subject to certain other constraints.

These may, for example be:—
(a) two or more parents,
(b) manual intervention,
(c) special circumstances.

Examples of these will now be given. The truth tables show the value z, which controls the resource. Here the fact that all states have been shown in the tables referred to specific resources does not mean that each resource shown takes all those states. In particular for some resources the only two states will be "not equipped" and "equipped", and "equipped" is not usually a possible state for a resource which may have the state "out of service".

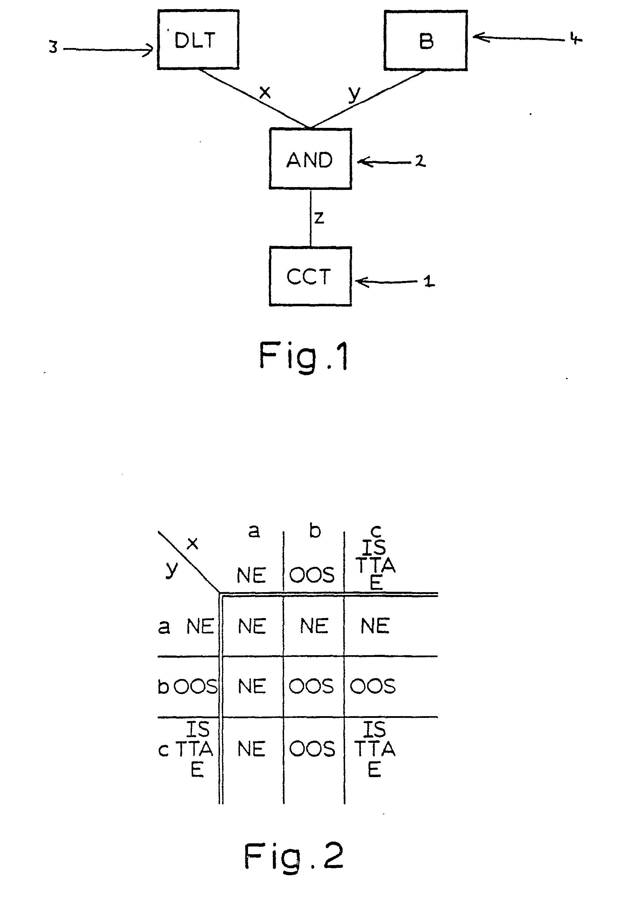

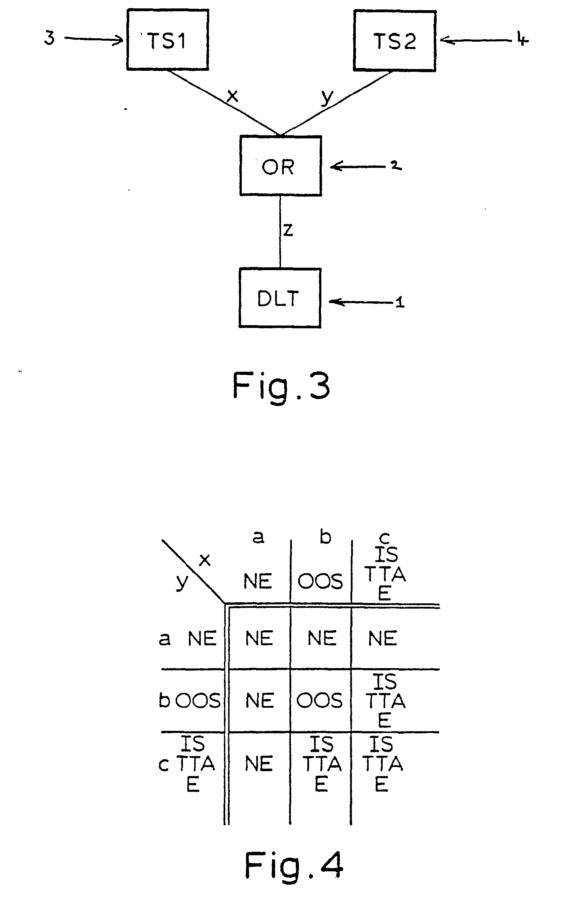

Referring to Figs. 1 and 2, in Fig. 1 there is shown a circuit (CCT) which is a dependant of both a band (B) (which could be a pcm system) and a digital line termination (DLT). Fig. 1 summarises the dependance of CCT on DLT and B, and shows the AND function as the hypothetical parent. The truth table shown in Fig. 2 is the truth table for the arrangement of Fig. 1 and it will be seen that the output controlling CCT is the lowest of either of the inputs from DLT and B. This is the normal situation. However an alternative two parents situation might exist, as shown in Fig. 3. Here, a DLT requires one of two time switches (TS1 and TS2) to work, but both TSs must be provided initially because one is a standby for another. An OR hypothetical parent is used, and the truth table is shown in Fig. 4. In this case it will be seen that whereas both TSs must be provided for the DLT to be provided only one of them need be in the highest state for the DLT to be in the highest state. The term "provided" means, of course, any state other than "not equipped".

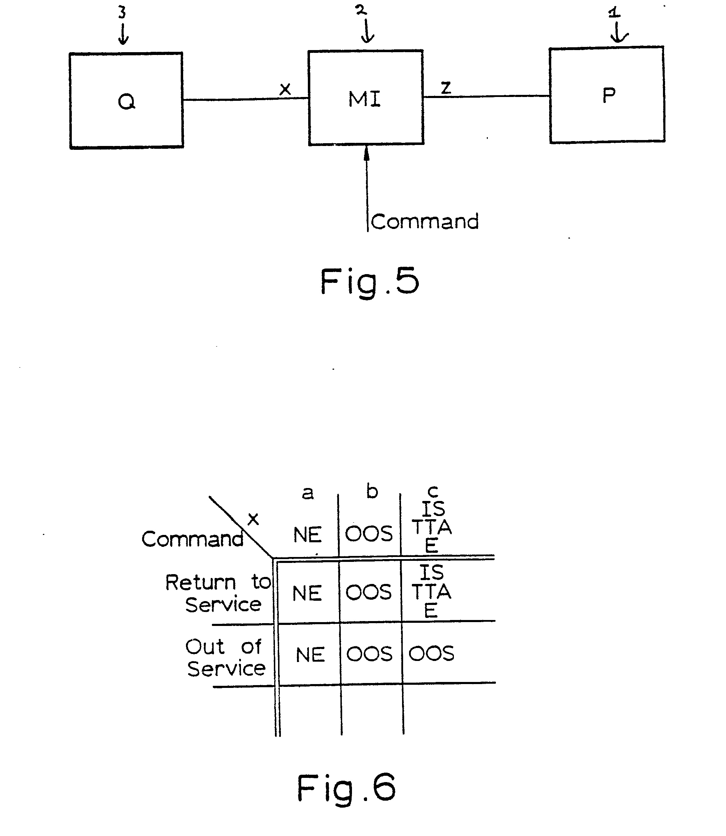

A further case is manual intervention (MI) shown in Fig. 5. Here a resource P depends on Q. If Q is NE or OOS, P must be NE or OOS respectively. However, if Q is IS, TTA or E, then P may only be so if a manual override is set. Fig. 6 shows the truth table for the situation.

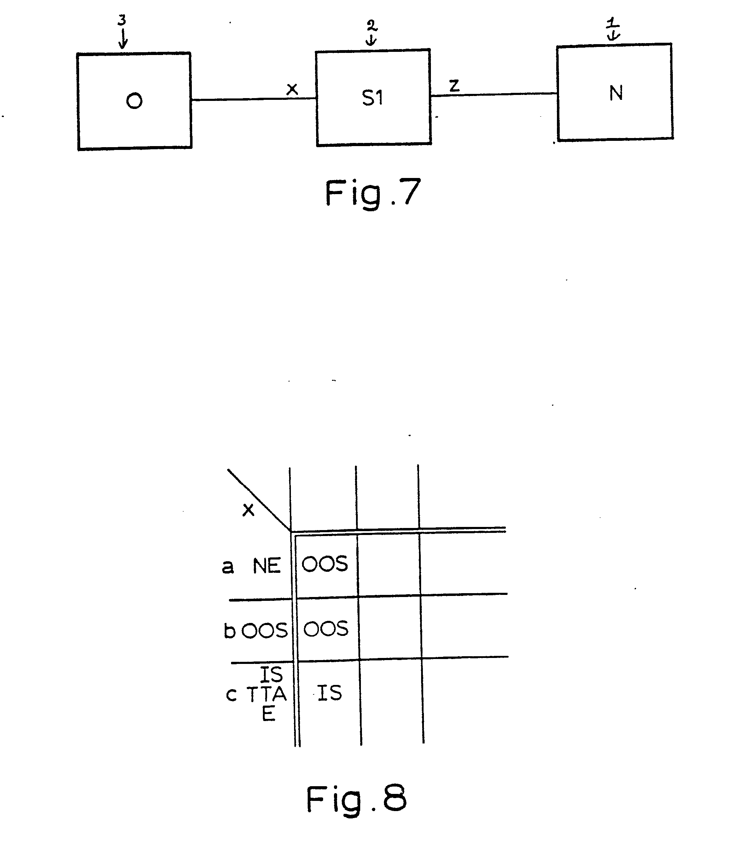

One example of a special circumstance is illustrated in Figs. 7 and 8, Fig. 7 being the hierarchy and Fig. 8 being the truth table. It is to cover the case where a resource must be equipped before its parent, although it must not be put into service until its parent is in service. Here a logical function S1 modifies the state of the parent O to produce the appropriate control on the resource N.

Obviously many more examples of logical functions to provide for other special or more common circumstances can be given, but they follow the general principle outlined in the description.

Thus in the hierarchy of resources (1, 3, 4) in the telephone exchange under consideration, each resource is contrained to a state less than or equal to that of a real (1, 3, 4) or hypothetical (2) parent and at the same time acts as a real parent or an input to a logic function to produce a hypothetical parent for resources below it in the hierarchy. In this way it can be easily assured that the reactions between the resources in the computer-controlled exchange are under control, and logically conflicting situations can not occur.

A further advantage of the arrangement as described is that it becomes possible to monitor the state of resources in the hierarchy very simply. A particular resource in the hierarchy may be additionally given a monitor function and, by utilising the lists of dependants which it already has and utilising the programmes already provided for interrogating them and determining their states, an output can be provided which shows the states of the dependants with relatively little extra programming and work.

### Claims

1. A computer-controlled system, in particular a computer-controlled telephone exchange, including a plurality of interactive resources (1, 3, 4) each of which resources is in the form of a hardware and/or software part of the system and can interact with one or more such resources to perform an overall task of the system (e.g. providing exchange facilities) under the control of a computer of the system utilising distributed, centralised or mixed processing power, in which system each of the interactive resources (1, 3, 4) may take one of a plurality of states of availability (e.g. equipped, not equipped, etc., as opposed to the activities, e.g. in use, free for use, etc., of in-service resources), the resources (1, 3, 4) are arranged in a hierarchy so that a given resource (1, 3, 4) has stored within it only the identity of parent resources ((3, 4), not shown, not shown, respectively) directly above it in the hierarchy which limit its highest state of availability and the identity of dependent resources (not shown, 1, 1 respectively) directly below it in the hierarchy whose highest states of availability it limits, and a change of state of availability of said given resource (1, 3, 4) is only permitted when the states of availability of the directly interacting resources ((3, 4), 1, 1 respectively) are compatible with said change.

2. A system as claimed in claim 1 wherein a change of state of availability in said given resource (1, 3, 4) enables and initiates a change in state of availability in a directly interacting resource ((3, 4) 1, 1 respectively) and which, but for the constraint of the previous state of availability of said given resource (1, 3, 4) could legitimately have made that change of state of availability.

3. A system as claimed in claim 1 or 2 wherein the state of availability of said given resource (1) is limited by a hypothetical resource (2) comprising a logic element operating on the states of availability of one or more directly interacting resources (3, 4).

4. A system as claimed in any of claims 1 to 3, wherein there are five states of availability.

5. A system as claimed in any of claims 1 to 4 wherein each state of availability is of one of a plurality of ranked categories and each given resource (1, 3, 4) is constrained to a state of availability having a category not higher than a logical combination of the categories of the states of availability of the parent resources ((3, 4), not shown, not shown, respectively).

6. A system, as claimed in any preceding claim, in which one or more given resources (1, 3, 4) may be interrogated to determine the states of availability of any or all of the resources ((3, 4), 1, 1, respectively) whose identities are stored in said given resource (1, 3, 4).

### Revendications

1. Système commandé par ordinateur, en particulier un central téléphonique commandé par ordinateur, comprenant une pluralité de ressources interactives (1, 3, 4), chacune desdites ressources se présentant sous la forme d'une partie matérielle et/ou logicielle du système et pouvant interagir avec une ou plusieurs desdites ressources pour effectuer une tâche globale du système (par exemple pour établir des agencements dans un central téléphonique) sous la commande d'un ordinateur du système utilisant une puissance de traitement distribuée, centralisée ou mixte, et dans ledit système chacune des ressources interactives (1, 3, 4) peut prendre l'un de plusieurs états de disponibilité (par exemple équipé, non équipé, etc.) par opposition aux activités (par exemple en utilisation, libre pour utilisation, etc.) de ressources en service, les ressources (1, 3, 4) sont agencées hiérarchiquement de façon qu'une ressource donnée (1, 3, 4) ait mémorisé intérieurement seulement l'identité de ressources associées (3, 4) non représenté, non représenté, respectivement) placées directement au-dessus d'elle dans la hiérarchie et qui limitent son état maximal de disponibilité et l'identité de ressources dépendantes (non représenté, 1, 1 respectivement) placées directement en dessous d'elle dans la hiérarchie et dont les états maximaux de disponibilité sont limités par elle, et un changement d'état de disponibilité de ladite ressource donnée (1, 3, 4) est seulement permis lorsque les états de disponibilité des ressources en interaction directe ((3, 4), 1, 1 respectivement) sont compatibles avec ledit changement.

2. Système comme revendiqué dans la revendication 1, dans lequel un changement d'état de disponibilité dans ladite ressource donnée (1, 3, 4) autorise et amorce un changement d'état de disponibilité dans une ressource en interaction directe ((3, 4) 1, 1 respectivement) et qui, en dehors de la conservation de l'état précédent de disponibilité de ladite ressource donnée (1, 3, 4), pourrait légitimement avoir effectué ce changement d'état de disponibilité.

3. Système comme revendiqué dans les revendications 1 ou 2, dans lequel l'état de disponibilité de ladite ressource donnée (1) est limité par une ressource hypothétique (2) comprenant un élément logique opérant sur les états de disponibilité d'une ou plusieurs ressources en interaction directe (3, 4).

4. Système comme revendiqué dans l'une quelconque des revendications 1 à 3, dans lequel il est prévu cinq états de disponibilité.

5. Système comme revendiqué dans l'une quelconque des revendications 1 à 4, dans lequel chaque état de disponibilité fait partie de l'une de plusieurs catégories classées et chaque ressource donnée (1, 3, 4) est maintenue dans un état de disponibilité correspondant à une catégorie non supérieure à une combinaison logique des catégories des états de disponibilité des ressources associées ((3, 4), non représenté, non représenté, respectivement).

6. Système comme revendiqué dans l'une quelconque des revendications précédentes, dans lequel une ou plusieurs ressources données (1, 3, 4) peuvent être interrogées pour déterminer les états de disponibilité de l'une quelconque ou de toutes les ressources ((3, 4), 1, 1, respectivement) dont les identités sont mémorisées dans ladite ressource donnée (1, 3, 4).

## Patentansprüche

1. Rechner-gesteuertes System, insbesondere eine Rechner-gesteuerte Telefonvermittlung, die eine Vielzahl von zusammenwirkenden Einrichtungen (1, 3, 4) aufweist, wobei jede dieser Einrichtungen ein Hardware- und/oder Softwareteil des Systems ist und mit einem oder mehreren dieser Einrichtungen zusammenwirken kann um eine übergeordnete Aufgabe des Systems zu erfüllen (z.B. eine Vermittlungsanlage zu schaffen) und zwar unter der Steuerung eines Rechners des Systems, der verteilte, zentralisierte oder gemischte Intelligenz (Steuergewalt) aufweist, wobei in deisem System jede der zusammenwirkenden Einrichtungen (1, 3, 4) einen oder eine Vielzahl von Verfügbarkeitszuständen haben kann (z.B. vorhanden, nicht vorhanden, usw. im Gegensatz zu den Tätigkeiten, z.B. in Gebrauch, frei zum Gebrauch, usw. von im Dienst befindlichen Einrichtungen), und wobei die Einrichtungen (1, 3, 4) in einer Hierarchie angeordnet sind, so daß eine bestimmte Einrichtung (1, 3, 4) nur die Identität seiner Eltern-Einrichtungen gespeichert hat ((3, 4) nicht gezeigt, nicht gezeigt entsprechend), die direkt über ihm in der Hierarchie liegen und welche den höchsten Status seiner Verfügbarkeit begrenzen sowie die Identität der davon abhängigen Einrichtungen (nicht gezeigt, 1, 1 entsprechend), welche direkt unter ihm in der Hierarchie liegen und dessen höchsten Status der Verfügbarkeit es begrenzt, wobei ein Wechsel des Zustands der Verfügbarkeit dieser bestimmten Einrichtung (1, 3, 4) nur zugelassen wird, wenn die Zustände der Verfügbarkeit der direkt damit zusammenwirkenden Einrichtungen ((3, 4), 1, 1, entsprechend) mit diesem Wechsel vereinbar sind.

2. System gemäß Anspruch 1, wobei ein Wechsel des Status der Verfügbarkeit dieser bestimmten Einrichtung (1, 3, 4) eine Änderung des Verfügbarkeitsstatus einer direkt damit zusammenwirkenden Einrichtung ((3, 4) 1, 1 entsprechend) ermöglicht und in Gang bringt und welche, wegen der Einschränkung des früheren Status der Verfügbarkeit dieser bestimmten Einrichtung (1, 3, 4) diese Änderung des Status der Verfügbarkeit legitimerweise durchführen konnte.

3. System gemäß Anspruch 1 oder 2, wobei der Status der Verfügbarkeit dieser bestimmten Einrichtung (1) durch die hypothetische Einrichtung (2) begrenzt wird, die ein logisches Element enthält, das auf den Verfügbarkeitsstatus von einem oder mehreren direkt damit zusammenwirkenden Einrichtungen (3, 4) wirkt.

4. System gemäß einem der Ansprüche 1 bis 3, wobei fünf Verfügbarkeitszustände vorhanden sind.

5. System gemäß einem der Ansprüche 1 bis 4, wobei jeder Verfügbarkeitsstatus einer Vielzahl von abgestuften Kategorien zugehört und jede bestimmte Einrichtung (1, 3, 4) auf einen Verfügbarkeitsstatus beschränkt ist, dessen Kategorie nicht höher ist, als eine logische Kombination von den Verfügbarkeitszuständen der Eltern-Einrichtungen ((3, 4), nicht gezeigt, nicht gezeigt, entsprechend).

6. System gemäß einem der vorstehenden Ansprüche, in welchem eine oder mehrere bestimmte Einrichtungen (1, 3, 4) abgefragt werden können um den Verfügbarkeitsstatus von einer oder aller Einrichtungen ((3, 4), 1, 1, entsprechend) festzustellen, deren Identitäten in dieser bestimmten Einrichtung (1, 3, 4) gespeichert sind.

Fig.1

Fig.2

```
3  ───►  ┌─────┐              ┌─────┐  ◄─── 4
         │ TS1 │              │ TS2 │
         └─────┘              └─────┘
             \  x          y  /
              \              /
               \            /
              ┌─────┐
              │ OR  │  ◄───  2
              └─────┘
                 │ z
                 │
              ┌─────┐
              │ DLT │  ◄───  1
              └─────┘
```

## Fig. 3

| x / y | a NE | b OOS | c IS TTAE |
|-------|------|-------|-----------|
| a NE   | NE | NE  | NE        |
| b OOS  | NE | OOS | IS TTAE   |
| c IS TTAE | NE | IS TTAE | IS TTAE |

## Fig. 4

Fig.5

Fig.6

Fig.7

Fig.8